# EUROPÄISCHE PATENTSCHRIFT

(11) **EP 1 044 763 B1**
(45) Veröffentlichungstag und Bekanntmachung des Hinweises auf die Patenterteilung: **13.12.2006**
(21) Anmeldenummer: 00107752.8
(22) Anmeldetag: 11.04.2000
(51) Int. Cl.: B23Q 11/00, F16F 15/00

(54) **Halter zum exakten Positionieren eines Werkstückes**
Holder for exact positioning of a workpiece
Support de positionnement exact d'un porte-pièce

(30) Priorität: 15.04.1999 DE 19917104
(43) Veröffentlichungstag der Anmeldung: 18.10.2000
(73) Patentinhaber: System 3R International AB, 162 50 Vällingby (SE)
(72) Erfinder: Nordquist, Hakon, 187 75 Täby (SE)
(74) Vertreter: Zinngrebe, Horst

(56) Entgegenhaltungen:
- EP-A- 0 739 680
- DE-A- 4 304 950
- US-A- 5 494 269
- US-A- 5 871 315

## Beschreibung

Die Erfindung betrifft einen Halter zum exakten Positionieren eines Werkstückes im Arbeitsbereich einer Werkzeugmaschine, insbesondere einer Erodiermaschine, welcher Befestigungselemente zum Befestigen an einer festen Trägerstruktur und Halteteile zum Halten des Werkstückes aufweist.

Bei der elektroerosiven Werkstückbearbeitung besteht die Notwendigkeit, die vom Werkstück abgetragenen feinsten Partikel aus dem unmittelbaren Arbeitsbereich vollständig zu entfernen, um die gewünschte Genauigkeit der Bearbeitung nicht zu beeinträchtigen. Zur Partikelentfernung dient eine Spülflüssigkeit üblicherweise auf Wasserbasis, die auf das Werkstück im Arbeitsbereich gerichtet wird. Mit zunehmender Schneidgeschwindigkeit fallen größere Mengen an zu beseitigendem Partikelpulver an. Deren Entfernung nötigt zu einer Erhöhung des Spülflüssigkeitsdruckes.

Der Erodierprozeß selbst läuft für das Werkstück kräftefrei ab, weil die Erodierelektrode beispielsweise in Form eines Schneiddrahtes mit dem Werkstück nicht in Berührung gelangt, sodaß die Werkstückposition nicht beeinflußt wird. Dagegen wirkt der erhöhte, üblicherweise nicht exakt konstante Spülflüssigkeitsdruck unmittelbar auf das Werkstück ein und regt im Werkstück sowie in seinem Halter Schwingungen an, unter denen die Genauigkeit der Werkstückposition und damit des Ergebnisses der Werkstückbearbeitung leiden.

Zur Überwindung dieser Schwierigkeit könnte man daran denken, die Masse des Halters über die normalen Festigkeitsanforderungen hinaus zu vergrößern. Damit wird der Halter jedoch unhandlich und schränkt den Arbeitsbereich ein.

Aus DE-A-41 39 272 ist ein Nutenstein mit einem Stützkörper bekannt, der von einem Füllkörper aus nichtmetallischem Material umgeben ist. Dieses Material soll schall- und schwingungsdämpfend wirken.

Aus dem Dokument US 5,494,269 A ist ein Schwingungsdämpfer bekannt, der die Form einer massiven Kappe besitzt und zwischen einem verlängerten Arm eines Werkstückes und einem Maschinentisch eingespannt werden kann. Diese Kappe ist beweglich und kann während der Bearbeitung des Werkzeuges durch eine Feder gegen das Werkstück gedrückt werden. Aus dem Dokument US 5,871,315 ist ferner ein Schwingungsdämpfer bekannt, der als massiver Block im Inneren eines hohlen Werkzeughalters angebracht ist. Alternativ kann eine voluminöse Dämpfermasse an einer Außenfläche des Werkzeughalters befestigt werden.

Der Erfindung liegt die Aufgabe zugrunde, einen Halter zu entwickeln, der gegenüber dem Spülflüssigkeitsdruck unempfindlich ist und den Arbeitsbereich nicht einschränkt.

Diese Aufgabe wird durch die Merkmale des Anspruchs 1 gelöst.

Im übrigen sind bevorzugte Ausgestaltungen der Erfindung in den Unteransprüchen angegeben. Die Erfindung wird nachstehend anhand der beigefügten Zeichnung im einzelnen an einem Nivellierkopf als Beispiel eines Halters beschrieben. Es zeigen:
Figur 1: eine perspektivische Ansicht eines Nivellierkopfes;
Figur 2: eine schematische Draufsicht auf den Nivellierkopf nach Figur 1 mit Schwingungsdämpfern;
Figur 3: eine schematische Darstellung eines Ausschnittes des Nivellierkopfes nach Figur 2 mit einer ersten Ausführungsform eines Schwingungsdämpfers erster Art;
Figur 4: eine schematische Darstellung eines Ausschnittes eines Nivellierkopfes nach Figur 2 mit einer zweiten Ausführungsform eines Schwingungsdämpfers erster Art;
Figur 5: eine schematische Seitenansicht einer weiteren Ausführungsform eines Nivellierkopfes mit einem Schwingungsdämpfer der zweiten Art;
Figur 6: eine schematische Draufsicht auf den Nivellierkopf nach Figur 5;
Figur 7: eine schematische Seitenansicht einer weiteren Ausführungsform eines Nivellierkopfes mit einem Schwingungsdämpfer der zweiten Art;
Figur 8: eine schematische Seitenansicht eines Nivellierkopfes mit einem anderen Schwingungsdämpfer der zweiten Art;
Figur 9: eine schematische Seitenansicht eines Halters mit Werkstück und einem Schwingungsdämpfer der zweiten Art;
Figur 10: eine schematische Seitenansicht eines auf einem Arbeitstisch befestigten Maschinenfutters mit einem Schwingungsdämpfer der zweiten Art;
Figur 11: eine schematische Seitenansicht eines Nivellierkopfes mit einem Schwingungsdämpfer der dritten Art mit punktiert angedeuteten wesentlichen Teilen einer Drahterosionsmaschine;
Figur 12: eine schematische Draufsicht auf den Nivellierkopf nach Figur 11 ohne Drahterosionsmaschinenteile; und
Figur 13: eine schematische Seitenansicht eines Nivellierkopfes nach einer erfindungsgemäßen Alternative.
Figur 14 eine schematische Ansicht eines Maschinenfutters mit Werkzeughalter mit einem Schwingungsdämpfer zweiter Art; und
Figur 15 eine schematische Seitenansicht eines Nivellierkopfes mit einem Schwingungsdämpfer zweiter Art.

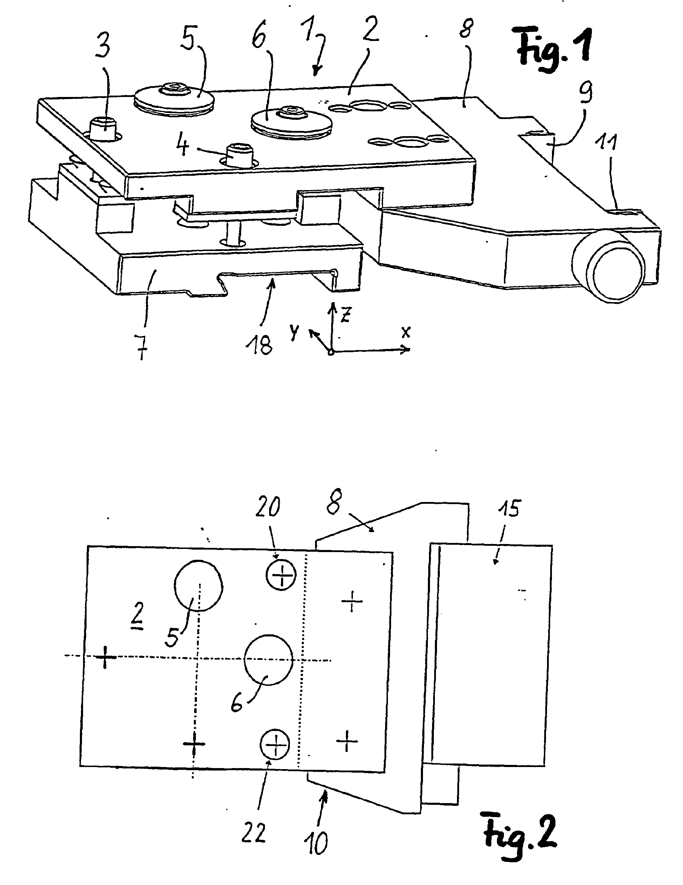

Der Nivellierkopf 1 nach Figur 1 ist im einzelnen in dem Dokument US-A-5,769,561 beschrieben, sodaß auf die dortigen Erläuterungen hier ausdrücklich Bezug genommen werden kann.

Der Nivellierkopf 1 besitzt ein Oberteil 2, welches durch in der x-y-Ebene versetzt angeordnete Stellschrauben 3, 4 gegen eine von zwei ebenfalls indieser Ebene versetzt angeordneten Federpaketen 5, 6 entwickelte Vorspannung in z-Richtung relativ zu einem Unterteil 7 einnivelliert werden kann. Vor dem Unterteil 7 ist am Oberteil 2 ein Präzisionsschraubstock 8 gemäß dem Dokument US-A-4,925,168 befestigt, zwischen dessen Backen 9, 11 ein in Figur 1 nicht dargestelltes Werkstück eingespannt werden kann. Das Oberteil 2 mit dem Präzisionsschraubstock 8 bilden im Sinne der Erfindung einen Halter für das Werkstück 15 (Figur 11), welches zur Bearbeitung durch den Erodierdraht 12 einer Drahterosionsmaschine 13, 14 in deren Arbeitsbereich 16 in x-, y- und z-Richtung exakt zu positionieren ist.

Das Unterteil 7 ist an seiner Unterseite im hier dargesestellten Ausführungsbeispiel mit einem Schwalbenschwanzprofil 18 versehen, sodaß es auf einer nicht dargestellten festen und mit einem Schwalbenschwanz-Gegenprofil versehenen Trägerstruktur etwa von der in US-A-4,786,776 dargestellten Art in x-Richtung sowie in der zu dieser senkrechten, zur Richtung des Erodierdrahtes 12 parallelen z-Richtung eindeutig festlegbar ist. Die Trägerstruktur weist ferner einen Anschlag auf, der eine eindeutige Positionierung des Unterteils 7 auch in y-Richtung erlaubt.

Nicht dargestellt ist in den Figuren die Spülflüsssigkeit sowie ihre Zu- und Ableitung zum Arbeitsbereich 16. Jedenfalls umspült sie das Werkstück 15 mit hohem Druck längs des Schnittes 17, den der Erodierdraht 12 am Werkstück 15 ausführt.

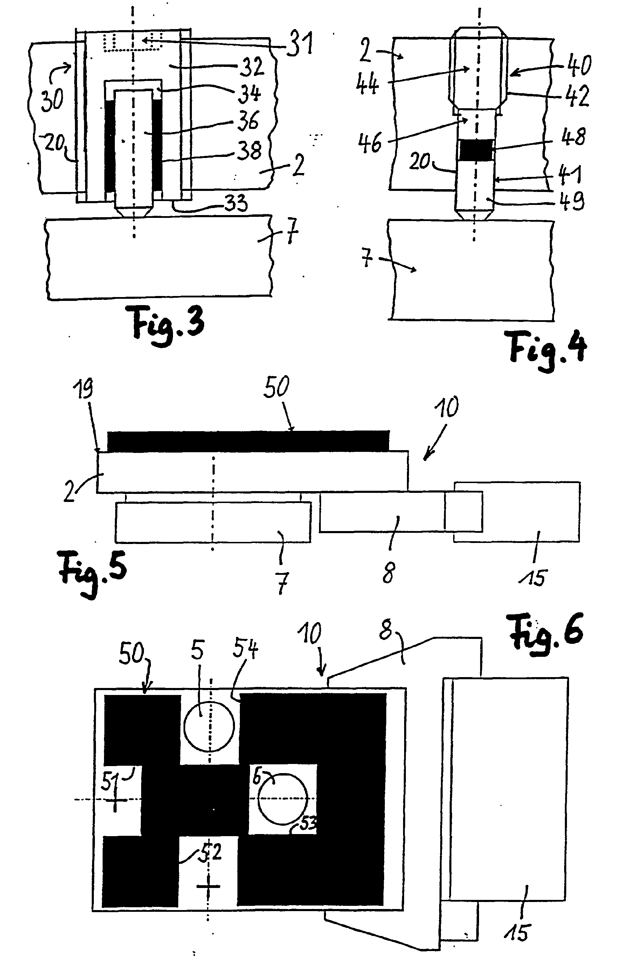

Erfindungsgemäß ist der Halter 10 mit einem oder mehreren Schwingungsdämpfern versehen. Bei dem ersten in Figur 2 gezeigten Ausführungsbeispiel sind in das Oberteil 2 zwei in y-Richtung beabstandete Gewindebohrungen 20, 22 in z-Richtung eingebracht. In jede dieser beiden Gewindebohrungen 20, 22 kann je ein Schwingungsdämpfer erster Art entweder in der Ausführungsform nach Figur 3 oder in der Ausführungsform nach Figur 4 eingebracht werden.

Bei der Ausführungsform nach Figur 3 besteht der Schwingungsdämpfer 30 erster Art aus einer mit Außengewinde versehenen Schraube 32 mit Innensechskant 31 in ihrer Oberseite, welche von der dem Innensechskant 31 gegenüberliegenden Unterseite 33 her zur Bildung eines Sackloches 34 aufgebohrt ist. In das Sackloch 34 ist ein Zylinderbolzen 36 eingesetzt, der sich auf der Oberseite des Unterteils 7 abstützt und mit der Schraube 32 durch einen Dämpfer 38 fest verbunden ist. Der Dämpfer 38 besteht aus einem gummiartigen Material und ist sowohl an die Innenfläche des Sackloches 34 wie auch an die Außenfläche des Zylinderbolzens 36 angeklebt. Wie man sieht, kann die Schraube 32 über ihre ganze Länge in die Bohrung 20 oder 22 eingeschraubt werden. Der bei Schwingungen auf Scherung beanspruchte Dämpfer 38 kann die dem Halter 10 durch die Spülflüssigkeit aufgeprägte Schwingungsenergie aufnehmen und durch seine Elastizität absorbieren, sodaß der Halter 10 schwingungsfrei bleibt.

Bei der Ausführungsform nach Figur 4 hat der Schwingungsdämpfer 40 erster Art die Form eines an einem Kopf 44 mit Außengewinde versehenen Bolzens 42, dessen relativ zum Kopf 44 etwas verjüngter Schaft 46 verkürzt ist. An die freie Stirnfläche des Schaftes 46 ist ein Dämpfer 48 aus gummiartigem Material angeklebt, der im entspannten Zustand etwas kleineren Durchmesser hat als der Schaft 46. An die freie Unterseite des Dämpfers 48 ist ein Stift 49 angeklebt, der mit dem Schaft gleichen Durchmesser hat und längenmäßig so bemessen ist, daß er aus der Unterseite des Oberteils 2 vorstehend sich auf der Oberseite des Unterteils 7 abstützen kann. Der Dämpfer 48 hat die gleichen energieabsorbierenden Eigenschaften wie der Dämpfer 38. Ein Innensechskant am Bolzenkopf 44 ist nicht dargestellt. Wird der Bolzen 42 weiter als dargestellt in die Durchgangsbohrung 20 hineingedreht, vergrößert sich der Querschnitt des Dämpfers 48, sodaß sich seine Federkonstante sowie sein Dämmkoefizient verändern. Die Eigenschaften des Dämpfers 48 sind also durch den Bolzen 42 einstellbar. Der Schwingungsdämpfer 40 ist vor allem für solche Durchgangsbohrungen 20, 22 geeignet, die nur in ihrem oberen Abschnitt mit Innengewinde versehen sind, welcher sich in einen innen glatten Zylinderbohrungasabschnitt 41 nach unten fortsetzt.

Bei der Ausführungsform der Erfindung gemäß Figuren 5 und 6 ist auf die Oberseite 19 des Oberteils 2 eine Matte 50 aus einem gummiartigen schwingungsabsorbierenden Material eines Schwingungsdämpfers zweiter Art aufgebracht und fest mit dem Oberteil 2 durch Verkleben oder Vulkanisieren verbunden. Für die Stellschrauben 3, 4 und die Federpakete 5, 6 sind in der Matte 50 Ausschnitte 51, 52, sowie 53 und 54 vorgesehen. Die Matte 50 hat eine Stärke von etwa einem Drittel der Stärke des Oberteils 2. Die Wahl der Stärke unterliegt jedoch keinen Beschränkungen. Alternativ kann statt dem Aufbringen eines gummiartigen Materials eine HDCM-Legierung wie eingangs erwähnt auf die Oberseite 19 aufgesprüht sein.

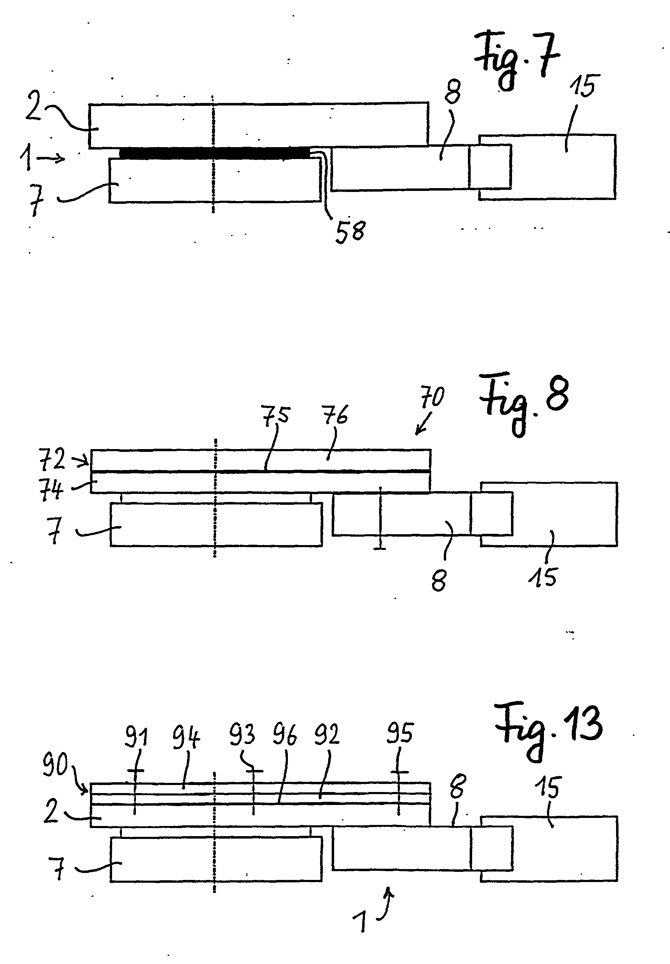

Figur 7 zeigt eine weitere Ausführungsform eines Schwingungsdämpfers zweiter Art. Der Nivellierkopf 1 weist wieder ein Oberteil 2, an welchem der Schraubstock 8 mit Werkstück 15 befestigt ist, und ein Unterteil 7 auf. Der Schwingungsdämpfer 58 zweiter Art umfaßt ein Dämmmaterial wie etwa Gummi, welches an die Unterseite des Oberteils 2 und an die Oberseite des Unterteils 7 zweckmäßig anvulkanisiert ist. Im übrigen entspricht der Nivellierkopf demjenigen, der in Figur 1 gezeigt ist.

Eine weitere Ausführungsform eines Schwingungsdämpfers zweiter Art zeigt Figur 8. Hier ist das bei den vorstehend beschriebenen Ausführungsformen als einteilig beschriebene Oberteil 72 des Nivellierkopfes 70 in der x-y-Ebene zu zwei zweckmäßig gleich großen und etwa durch Schrauben verbundenen Platten 74, 76 segmentiert, zwischen die als Dämmmaterial Gummi oder eine Dämmfolie 75, beispielsweise die erwähnte Folie 2552, zwischengelegt ist. Das Unterteil sowie der am Oberteil 72 befestigte Schraubstock 8 mit Werkstück 15 gleichen den oben beschriebenen Gestaltungen.

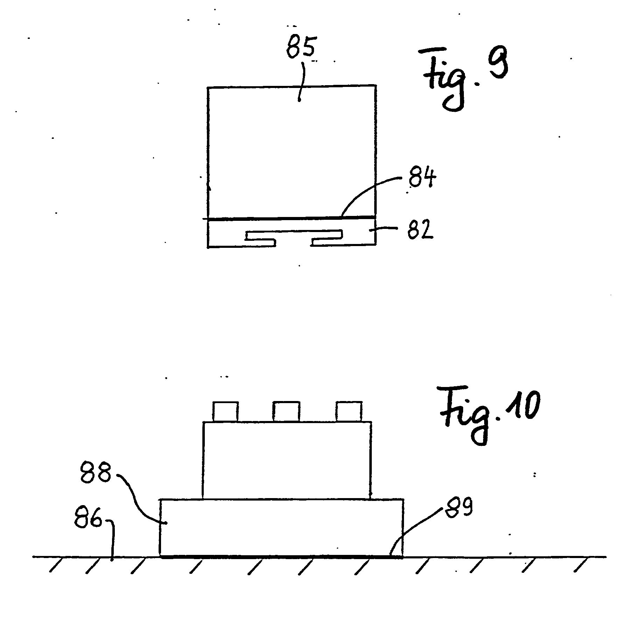

Zwei weitere Beispiele eines Schwinungsdämpfers zweiter Art zeigen die Figuren 9 und 10. Gemäß Figur 9 ist ein Werkstück 85 an der Unterseite eines Halters 82 befestigt, wobei zwischen Werkstück 85 und Halter 82 Dämmmaterial etwa eine der vorstehend erwähnten Dämmfolien 84 zwischengelegt, beispielsweise zwischengeklebt ist. Das Werkstück 85 ist mit dem Halter 82 verschraubt. In Figur 10 ist ein Arbeitstisch 86 angedeutet, auf welchem ein Maschinenfutter 88 als Halter für ein nicht dargestelltes Werkstück über eine zwischengelegte Dämmfolie 89 befestigt ist.

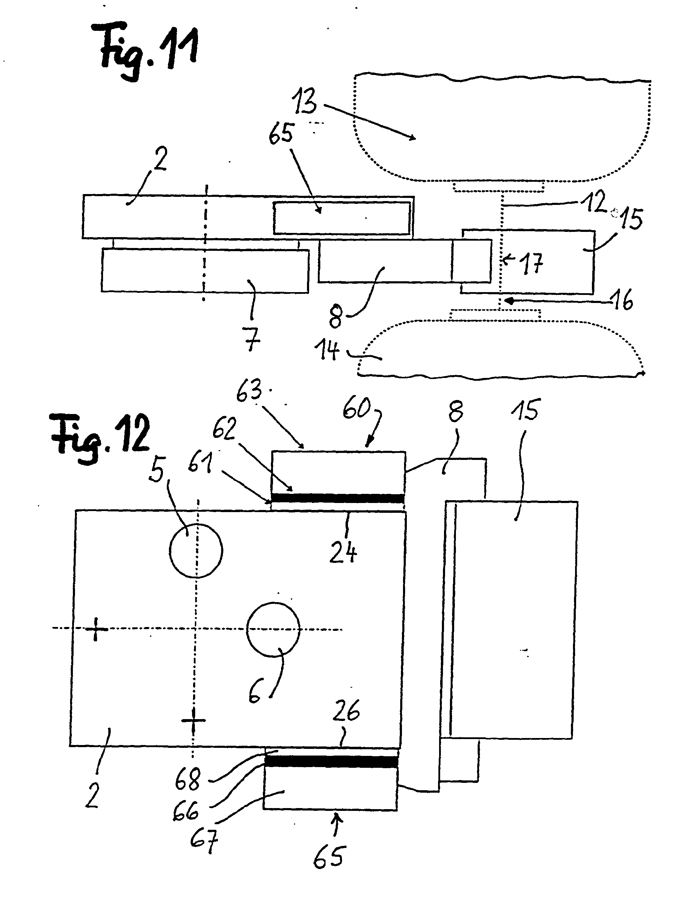

Figuren 11 und 12 zeigen Schwingungsdämpfer der dritten Art für den Nivellierkopf nach Figur 1. Hier sind zwei Schwingungsdämpfer 60, 65 vorgesehen, von denen der Schwingungsdämpfer 60 an dem Seitenflächenabschnitt 24 des Oberteils 2 und der Schwingungsdämpfer 65 an dem gegenüberliegenden Seitenflächenabschnitt 26 des Oberteils 2 jeweils in unmittelbarer Nachbarschaft des Präzisionsschraubstockes 8 angebracht sind. An den Seitenflächenabschnitt 24 ist eine flache Verankerungsplatte 61 angeschraubt, welche an ihrer Außenfläche mit einem plattenförmigen Dämpfer 62 aus gummiartigem Werkstoff versehen ist. An seiner Außenfläche trägt der Dämpfer 62 einen Masseblock 63. Alternativ kann der Masseblock 63 beispielsweise in Form einer massiven Stahlkugel in den Werkstoff des Dämpfers 62 eingebettet sein. Der Masseblock hat eine im Vergleich zu den im Oberteil 2 angeregten Schwingungen niedrige Eigenfrequenz, sodaß er die Schwingungsenergie des Oberteils 2 absobieren kann. Ersichtlich vergrößert der seitlich am Oberteil 2 angebrachte Schwingungsdämpfer 60 die Höhe des Nivellierkopfes 1 nicht, sodaßer den nutzbaren Arbeitsbereich nicht einengt.

Der Schwingungsdämpfer 65 ist genauso aufgebaut wie der Schwingungsdämpfer 60. So ist ein Masseblock 67 über einen plattenförmigen Dämpfer 66 mit der Außenseite einer Verankerungsplatte 68 fest verbunden, welche an den Außenflächenabschnitt 26 angeschraubt ist. Die Zwischenschaltung der Verankerungsplatten 61, 68 zwischen dem Dämpfer 62, 66 und dem Masseblock 63, 67 einerseits und dem Oberteil 2 andererseits erlaubt den Austausch der Schwingungsdämpfer 60, 65, sodaß sie hinsichtlich ihrer Eigenfrequenz, ihrer Dämpfungscharakteristik sowie ihren Abmessungen an den jeweiligen Anwendungsfall angepaßt werden können.

Gegebenenfalls können die beiden Schwingungsdämpfer 60, 65 auch direkt mit demjenigen Teil des Werkstückes 15 oben und unten verbunden werden, der von dem Erodierdraht 12 nicht bearbeitet wird und sich beispielsweise zwischen den Backen 9, 11 des Präzisionsschraubstockes 8 befindet.

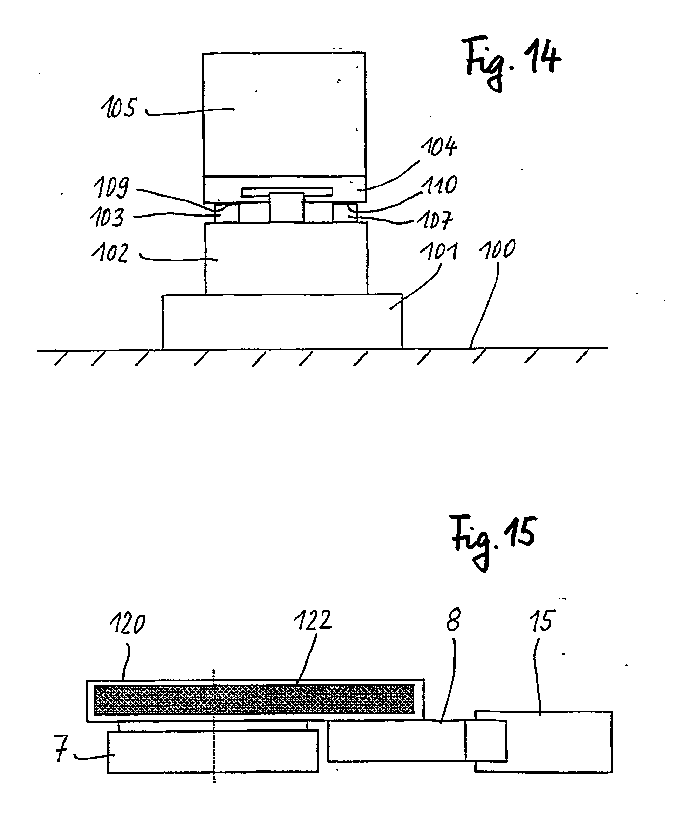

Figur 13 schließlich zeigt einen Schwingungsdämpfer 90 der vierten Art für den Halter, d.h. im vorliegenden Anwendungsfall für das Oberteil 2 eines Nivellierkopfes 1. Der Schwingungsdämpfer 90 besteht aus einem Paket von mehreren gleich großen flachen Platten, hier den Platten 92, 94, die durch Verschraubung oder Verklebung dauerhaft miteinander sowie mit Schrauben 91, 93, 95 mit der Oberseite des Oberteils 2 verbunden sind. Das Plattenpaket erstreckt sich parallel zur Oberseite des Oberteils 2 und ist im wesentlichen genauso groß wie dieses. Der Schwingungsdämmeffekt ergibt sich durch die Reibung der bei Schwingungen des Oberteils 2 auf Scherung beanspruchten Platten 92, 94 aneinander. Die Platten können aus Metall oder einem härteren Kunststoff bestehen. Der Schwingungsdämmeffekt kann noch dadurch vergrößert werden, daß zwischen die dem Oberteil 2 benachbarte Platte 92 und die Oberfläche des Oberteils eine dünne weitere Platte 96 mit hohem Reibungskeoffizienten zwischengelegt ist.

Im übrigen liegt es im Rahmen der Erfindung, das Oberteil 2 selbst durch Lamellen zu segmentieren, indem es aus einem sandwichartigen Lamellenpaket entsprechend dem Plattenpaket 92, 94 gefertigt ist, wobei die aufeinander zuweisenden Oberflächen der Lamellen zur Erhöhung des Reibungskoeffizienten aufgerauht sein können oder eine Reibplatte entsprechend der Platte 96 zwischengefügt sein kann.

Figur 14 zeigt als weitere Ausführungsform der Erfindung eine auf einen Maschinentisch 100 aufgesetzte Palette 101, welche ein Maschinenspannfutter 102 trägt. Auf das Futter 102 ist ein ein Werkstück 105 tragender Werkstückhalter 104 aufgespannt. Das Futter 102 und der Werkstückhalter 104 können von der Art sein, wie sie in der USA Patentschrift 4,855,558 beschrieben ist. Auf den Inhalt dieser Schrift wird hier Bezug genommen. So weist die dem Futter im gespannten Zustand zugekehrte Oberseite des Werkzeughalters 104 plane Flächenabschnitte, hier mit 106, 108 bezeichnet, auf, die beim Spannen gegen freie Stirnflächen (axiale Referenzflächen) von aus dem Futter 102 vorstehenden Zapfen 103, 107 anliegen. Erfindungsgemäß sind die freien Stirnflächen der Zapfen 103, 107 mit je einem Schwingungsdämpfer 109, 110 in Form einer aufgebrachten, eingangs erwähnten HDCM-Legierung versehen, die ein Mitschwingen der axialen Referenzflächen verhindert oder zumindest wesentlich dämmt. Diese Legierung wird zweckmäßig durch Aufsprühen im Unterdruck in einer Stärke von weniger als 2 mm aufgebracht und kann anschließend zur Erzeugung einer Referenzfläche geschliffen werden. Bei einfacheren Ausführungsformen kann das Schleifen auch entfallen. Im Sinne der Erfindung ist das Futter 102 als Halter zu verstehen.

Figur 15 schließlich zeigt wieder einen Nivellierkopf in schematischer Seitenansicht, der mit einer anderen Ausführungsart eines Schwingungsdämpfers der zweiten Art versehen ist. Das auf das Unterteil 7 aufgespannte Oberteil 120 besteht aus einem offenzelligen, porösen Werkstoff, beispielsweise einem metallischen Gußteil, dessen Zellen mit Dämmmaterial im wesentlichen vollständig ausgefüllt sind. Dazu wird das fertige Gußteil etwa in eine Kautschuk- oder Gummilösung eingetaucht und nach Sättigung des Gußteils mit der Lösung wird das Lösungsmittel etwa durch Wärmebehandlung ausgetrieben, sodaß das Gummi in das Gußteil einvulkanisiert wird. Die mechanische Festigkeit des Oberteils 120 übernimmt das Gußteil und die Schwingungsdämmung besorgt das einvulkanisierte Gummi 122. In einer alternativen Ausführungsform kann das Oberteil 120 aus einem festen metallischen Kasten bestehen, in dessen hohlem Inneren ein Dämmstoff etwa in Form von einvulkanisiertem Gummi, Gummikugeln oder Gummipaketen befestigt ist.

Vorstehende Erläuterung der Erfindung am Beispiel eines Nivellierkopfes zeigt vier prinzipiell unterschiedliche Arten von Schwingungsdämpfern, die im Rahmen der Erfindung eingesetzt werden können. Die in den Figuren 2 bis 4 gezeigten Schwingungsdämpfer 30, 40 erster Art sehen vor, daß ein Dämpfer 38, 48 aus Gummi oder einem gummiartigen Werkstoff zwischen zwei Gegenstände, hier die Schraube 32 bezw. den Schraubenkopf 44 und den Bolzen 36 bezw. den Stift 49, zwischengelegt ist, von denen ein Teil 32, 44 relativ zum anderen Teil 36, 49 zu Schingungen angeregt wird, hier durch den auf das Werkstück 15, welches mit dem Oberteil 2 fest verbunden ist, einwirkenden Spülflüssigkeitsdruck. Hier sind die Dämpfungsfähigkeit und die Federkonstante des Dämpfers 38, 48 durch Wahl des Werkstoffes sowie seiner Abmessungen in radialer sowie axialer Richtung so einstellbar, daß die Eigenfrequenz des aus Dämpfer 38, 48, Oberteil 2 und Werkstück 15 bestehenden Systems weit entfernt von der Eigenfrequenz der von der Spülflüssigkeit angeregten Schwingungen liegt.

Die zweite Art des Schwingungsdämpfers zeigen Figuren 5 bis 10, bei welchen die dynamischen Eigenschaften des Halters 10 als diejenigen eines festen Materials, beispielsweise eines massiven Balkens betrachtet werden können. Es liegt also keine Relativbewegung zweier Gegenstände relativ zueinander vor. Hier kann es genügen, einen Dämpfer 50 aus einem festen Werkstoff mit innerer Dämpffähigkeit, beispielsweise Gummi, auf den Halter 10 außen aufzubringen.

Bei der dritten Art eines Schwingungsdämpfers gemäß Figuren 11 und 12 ist der Dämpfer 62, 66 mit einer Masse (Masseblöcke 63, 67) verbunden, die eine Anpassung der Dämpfcharakteristik an jeden Anwendungsfall, d.h. beispielsweise an unterschiedliche Spülflüssigkeitsdrücke, in besonders einfacher Weise erlaubt, wobei stets der gleiche gummiartige Werkstoff verwendet werden kann. Ferner kann der Schwingungsdämpfer 60, 65 so dimensioniert werden, daß er möglichst nahe an dem Bereich eingebaut werden kann, in welchem die Vibrationen induziert werden. Wie besonders deutlich Figur 11 veranschaulicht, sind die räumlichen Verhältnisse bei einer Drahterodiermaschine 13, 14 vor allem in z-Richtung recht beengt. Hier bringt die freie dimensionsmäßige Form des Schwingungsdämpfers 60, 65 insofern besondere Vorteile, als seine Verwendung keine Erhöhung des Platzbedarfs für den Halter 10 in z-Richtung zur Folge hat.

Bei der vierten Art des Schwingungsdämpfers nach Figur 13 schließlich werden Reibungskräfte zwischen verbunden Platten oder Lamellen zur Absorption einer Schwingungsenergie ausgenutzt.

## Patentansprüche

1. Halter (10, 88) zum exakten Positionieren eines Werkstückes (15) im Arbeitsbereich einer Werkzeugmaschine, insbesondere einer Erodiermaschine (13, 14), welcher Befestigungselemente (3, 4, 5, 6) zum Befestigen an einer festen Trägerstruktur (7) und Halteteile (8, 9, 11, 82) zum Halten des Werkstücks sowie einen Schwingungsdämpfer aufweist, **dadurch gekennzeichnet, dass** der Schwingungsdämpfer eine Dämmfolie (75, 89, 96) ist, die zwischen den Halter (88) und die Trägerstruktur (76; 86, 92, 94) zwischengefügt ist.

2. Halter nach Anspruch 1, **dadurch gekennzeichnet, dass** die Dämmfolie aus Gummi oder einem gummiartigen Material besteht.

3. Halter nach einem der Ansprüche 1 oder 2, **dadurch gekennzeichnet, dass** die Stärke der Dämmfolie wesentlich kleiner ist, als ihre seitlichen Abmessungen.

## Claims

1. Holder (10, 88) for exact positioning of a workpiece (15) in the working range of a machine tool, in particular an eroding machine (13, 14), which has fastening elements (3, 4, 5, 6) for fastening to a fixed support structure (7) and holding parts (8, 9, 11, 82) for holding the workpiece and a vibration damper, **characterised in that** the vibration damper is a damping film (75, 89, 96), which is inserted between the holder (88) and the support structure (76; 86, 92, 94).

2. Holder according to claim 1, **characterised in that** the damping film comprises rubber or a rubber-like material.

3. Holder according to one of the claims 1 or 2, **characterised in that** the thickness of the damping film is substantially less than its lateral dimensions.

## Revendications

1. Support (10, 88) pour le positionnement exact d'une pièce (15) dans la zone de travail d'une machine-outil, en particulier d'une érodeuse (13, 14), laquelle présente des éléments de fixation (3, 4, 5, 6) pour la fixation sur une structure porteuse (7) fixe et des parties de retenue (8, 9, 11, 82) pour la retenue de la pièce et un amortisseur de vibrations, **caractérisé en ce que** l'amortisseur de vibrations est un film isolant (75, 89, 96), qui est inséré entre le support (88) et la structure porteuse (76 ; 86, 92, 94).

2. Support selon la revendication 1, **caractérisé en ce que** le film isolant est à base de caoutchouc ou d'un matériau de type caoutchouc.

3. Support selon l'une quelconque des revendications 1 et 2, **caractérisé en ce que** l'épaisseur du film isolant est sensiblement plus petite que ses dimensions latérales.
